(19) Europäisches Patentamt / European Patent Office / Office européen des brevets

(11) **EP 3 675 341 A1**

(12) **EUROPEAN PATENT APPLICATION**

(43) Date of publication:
01.07.2020 Bulletin 2020/27

(51) Int Cl.:
*H02M 3/335* (2006.01)   *H02J 7/08* (2006.01)

(21) Application number: 19219801.8

(22) Date of filing: 27.12.2019

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 31.12.2018 KR 20180174076

(71) Applicant: LG Electronics Inc.
SEOUL, 07336 (KR)

(72) Inventors:
• PAK, Cheolwoo
  Seoul 08592 (KR)
• KIM, Woosup
  Seoul 08592 (KR)

(74) Representative: Vossius & Partner
Patentanwälte Rechtsanwälte mbB
Siebertstrasse 3
81675 München (DE)

(54) **DC-DC CONVERTER FOR ELECTRIC VEHICLE**

(57)     A direct-current to direct-current (DC-DC) converter is provided for use in an electric vehicle. The DC-DC converter is configured to be used as either a resonant converter or a PWM converter in the electric vehicle. For example, the DC-DC converter may operate as a resonant converter in which a current is sequentially applied through a first conversion unit, a resonant tank, a transformation unit, and a second conversion unit. The DC-DC converter may further operate as a pulse width modulation (PWM) converter in which a current is sequentially applied through the second conversion unit, the transformation unit, and a third conversion unit.

## FIG. 1

FIRST DC (100) → FIRST CURRENT CONVERSION UNIT (110) → TRANSFORMATION UNIT (120) → SECOND CURRENT CONVERSION UNIT (130) → SECOND DC (150)

## Description

## BACKGROUND

## 1. Technical Field

The present disclosure relates to a DC-DC converter used in an electric vehicle.

## 2. Description of the Related art

In general, an electric vehicle may refer to a vehicle which is driven by using electric energy charged from a commercial power source. The electric vehicle may include a main battery charged with power from the commercial power source, and a plurality of vehicle devices operated by the main battery.

A current supplied from a commercial power source to charge the electric vehicle typically has a very high voltage for fast charging. Accordingly, the electric vehicle transforms the current of the commercial power source into a charging voltage for the main battery, and inputs the transformed charging current into the main battery so that the main battery is charged. To this end, the electric vehicle requires a DC-DC converter that converts an input DC current into a DC current having a different voltage. For example, a resonant converter that converts power in a manner of varying a frequency is mainly used.

Meanwhile, power charged in the main battery may be supplied as a power source to various additional devices provided in the electric vehicle. However, the main battery supplies a voltage of 48 V to drive the electric vehicle, while the additional devices of the electric vehicle typically use a current of a voltage level of 12 V. Therefore, an additional DC-DC converter is required in order to use the power of the main battery as the power source for the additional devices. And in such case that a transformation of a voltage level is not made in a wide range, a pulse width modulation (PWM) converter of a PWM method in which a current is converted according to a time that power is transferred at a fixed frequency is mainly used.

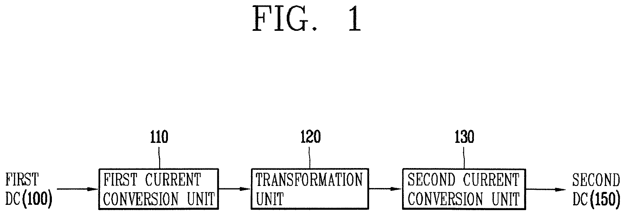

Typically a DC current cannot be transformed. Therefore, the DC-DC converter has a configuration to convert an input direct current (first DC) 100 into alternating current (AC) for transformation, transform the AC current, and converts the transformed AC current into a DC current again. Therefore, as illustrated in FIG. 1, typically a DC-DC converter may include a first current conversion unit 110 converting an input DC current (first DC) 100 into an AC current, a transformation unit 120 transforming the AC current converted in the first current conversion unit 110 into an AC current of another voltage level, and a second current conversion unit 130 converting the AC current transformed in the transformation unit 120 into a DC current (second DC) 150 again.

Because, as described above, converters are configured and used to convert power in different ways according to the range of the voltage to be transformed, an electric vehicle typically uses a resonant converter and a PWM converter respectively connected to a main battery. Therefore, the resonant converter and the PWM converter requires their own installation spaces in an internal device of the electric vehicle, which makes it difficult to efficiently use the internal space of the electric vehicle.

## SUMMARY

An aspect of the present disclosure provides a DC-DC converter that can employ both a resonance type power conversion and a PWM type power conversion.

Another aspect of the present disclosure provides a DC-DC converter that can be used as a resonant converter while a main battery is being charged, and used as a PWM converter while the main battery is being discharged, by changing inductance characteristics.

In order to achieve these and other advantages and in accordance with the purpose of this specification, as embodied and broadly described herein, there is provided a DC-DC converter including a first conversion unit configured to receive a direct current converted from a commercial alternating current and convert the received direct current into an alternating current, a resonant tank having a resonant inductor and a capacitor and configured to convert a frequency of a current input from the first conversion unit, a second conversion unit configured to convert an alternating current having a charging voltage for a main battery of an electric vehicle into a direct current for charging the main battery when the alternating current is input, or to convert a direct current into an alternating current when the direct current is input from the main battery, a third conversion unit configured to receive an alternating current transformed into a current having a specific voltage and convert the received alternating current into a direct current to be supplied to devices provided in the electric vehicle, and a transformation unit having one side connected with the resonant tank and the third conversion unit and another side connected with the second conversion unit, and configured to transform an alternating current with a converted frequency into an alternating current having a charging voltage for the main battery so as to output the transformed alternating current to the second conversion unit when the alternating current with the converted frequency is input, and transform an alternating current converted in the second conversion unit into the alternating current having the specific voltage so as to output the transformed alternating current to the third conversion unit when the alternating current converted in the second conversion unit is input.

In an embodiment, the transformation unit includes an insulator, a first inductor and a third inductor provided at one side of the insulator, the first inductor connected to the first conversion unit, and the third inductor connected to the third conversion unit, and a second inductor provided at another side of the insulator and connected to the second conversion unit, wherein the transformation unit, when the alternating current converted in the first conversion unit is input through the first inductor, transforms the input alternating current into the alternating current having the charging voltage for the main battery according to a turn ratio between the first inductor and the second inductor, and wherein the transformation unit, when the alternating current converted in the second conversion unit is input through the second inductor, transforms the input alternating current into the current having the specific voltage according to a turn ratio between the second inductor and the third inductor.

In an embodiment, an inductance of the second inductor is determined according to an inductance of the first inductor, and an inductance of the third inductor is determined according to the inductance of the second inductor.

In an embodiment, the third inductor is configured in which a plurality of inductors is connected in series.

In an embodiment, the resonant tank includes a resonant inductor, an auxiliary inductor having both ends connected to both ends of the first inductor of the transformation unit, respectively, and at least one switch provided between at least one of the both ends of the first inductor and at least one of the both ends of the auxiliary inductor to connect the at least one end of the auxiliary inductor and the at least one end of the first inductor, wherein the at least one switch is closed when a direct current converted from a commercial alternating current is input to the direct-current to direct-current converter, so that the at least one end of the auxiliary inductor and the at least one end of the first inductor are connected, and is open when the direct current converted from the commercial alternating current is not input to the direct-current to direct-current converter, so that the connection between the at least one end of the auxiliary inductor and the at least one end of the first inductor is released.

In one embodiment, the resonant tank is configured such that the auxiliary inductor and the first inductor are connected in parallel to each other according to whether the at least one switch is closed or not, to generate an inductance allowing the transformation unit to transform the alternating current converted in the first conversion unit into the alternating current having the charging voltage for the main battery.

In an embodiment, the inductance of the first inductor is a predetermined level greater than the inductance of the auxiliary inductor.

In one embodiment, the DC-DC converter further includes a switch provided between the first conversion unit and the resonant tank or between the resonant tank and the transformation unit, wherein the switch is closed when a direct current converted from a commercial alternating current is input to the direct-current to direct-current converter, so that both ends of the switch are connected to each other, and is open when the direct current converted from the commercial alternating current is not input to the direct-current to direct-current converter, the both ends of the switch are disconnected from each other.

In an embodiment, the DC-DC converter further includes a power factor correction (PFC) conversion unit configured to convert the commercial alternating current into a direct current, wherein the power factor correct conversion unit controls the switch to be closed when the commercial alternating current is converted into the direct current.

In an embodiment, the DC-DC converter operates as a resonant converter in which a current is sequentially applied through the first conversion unit, the resonant tank, the transformation unit, and the second conversion unit, when the switch is closed, and operates as a pulse width modulation (PWM) converter in which a current is sequentially applied through the second conversion unit, the transformation unit, and the third conversion unit, when the switch is open.

The systems, devices, methods, and techniques according to embodiments of the present disclosure can provide several advantages.

For example, according to at least one of the embodiments of the present disclosure, an electric vehicle can use one DC-DC converter as a resonant converter or a PWM converter, thereby using a space inside the electric vehicle more efficiently.

In addition, some implementations of the present disclosure satisfies both inductance characteristics required to charge and discharge the main battery, so that one DC-DC converter can provide both a functionality of the resonant converter and a functionality of the PWM converter.

Also, some implementations of the present disclosure effectively blocks an inflow of the reflection voltage that may occur during the discharge of the main battery, thereby preventing a leakage current generated when the DC-DC converter operates as a PWM converter and preventing burnout of elements due to voltage stress or current stress.

## BRIEF DESCRIPTION OF THE DRAWINGS

FIG. 1 is a block diagram illustrating a typical structure of a DC-DC converter.
FIG. 2 is a block diagram and a circuit diagram illustrating a structure of a DC-DC converter according to an embodiment of the present disclosure.
FIG. 3 is a conceptual view illustrating a current flow during charging and discharging of a main battery in a DC-DC converter according to an embodiment of the present disclosure.
FIG. 4 is a block diagram illustrating a structure of a DC-DC converter having a switch according to an embodiment of the present disclosure.

FIG. 5 illustrates two examples of a switch provided in a resonant tank, among examples of a DC-DC converter including a switch according to an embodiment of the present disclosure.

FIG. 6 is a block diagram illustrating an example DC-DC converter according to an embodiment of the present disclosure, as opposed to a typical example circuit including both a resonant converter and a PWM converter.

## DETAILED DESCRIPTION OF THE EMBODIMENT

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, detailed description of related known functions or constructions may be omitted for the sake of brevity, but such description would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

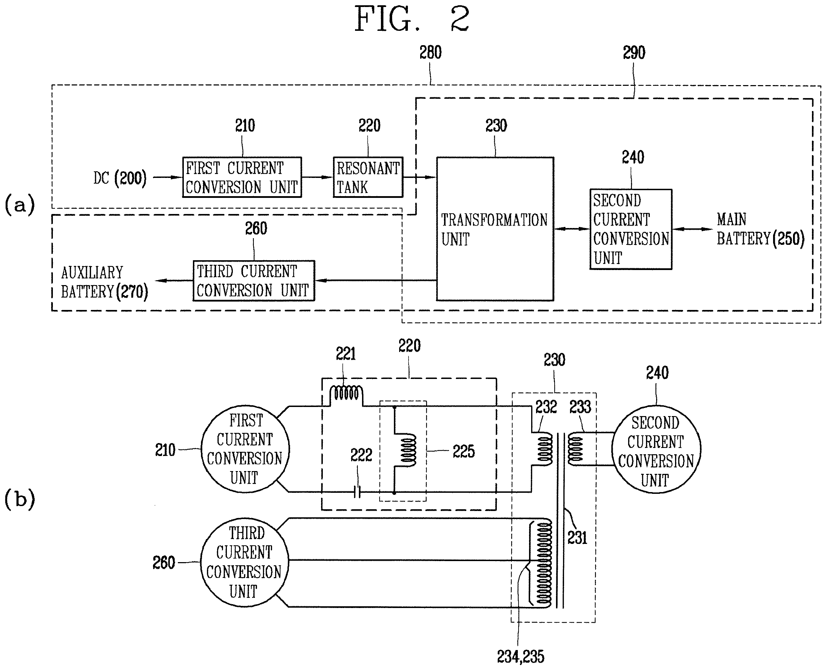

FIG. 2 are a block diagram (a) and a circuit diagram (b) illustrating an example structure of a DC-DC converter according to an embodiment of the present disclosure.

Referring to the block diagram (a) of FIG. 2, the DC-DC converter according to an embodiment of the present disclosure may include a first current conversion unit 210, a resonance tank 220, a transformation unit 230, a second current conversion unit 240, a main battery 250, and a third current conversion unit 260.

The first current conversion unit 210 can be configured to receive a DC current and convert the input DC current into an AC current for transformation. In some implementations, the DC current may be a DC current input to charge the main battery. For example, the DC current input to the first current conversion unit 210 may be a DC current to which an AC current supplied from a commercial power source has been converted by a power factor correction (PFC). In some implementations, the DC current input to the first current conversion unit 210 may be a current according to a voltage of the commercial power source, and may be a current having a voltage of about 400 V.

After the DC current is converted into an AC current having a frequency in the first current conversion unit 210, the converted AC current may be input to a resonant tank 220. The resonant tank 220 may include a resonant circuit having a resonant inductor and a capacitor, and may convert the frequency of the AC current input from the first current conversion unit 210 according to a resonant frequency of the resonant circuit. Then, the AC current with the converted frequency may be supplied to the transformation unit 230.

The transformation unit 230 may be connected to the resonant tank 220, and may transform the AC current applied from the resonant tank 220 into an AC current having a different voltage. For example, the transformation unit 230 may transform the AC current supplied from the resonant tank 220 to an AC current of a charging voltage for the main battery 250, for example, a voltage corresponding to 48 V. Then, the transformed AC current may be output to the second current conversion unit 240.

When the AC current transformed by the transformation unit 230 is input to the second current conversion unit 240, the second current conversion unit 240 may convert the input AC current into a DC current. In embodiments where the input AC current is of a charging voltage for the main battery 250, the current conversion unit 240 can generate a DC current of the charging voltage capable of charging the main battery 250. The generated DC current may be supplied to the main battery 250 to charge the main battery 250.

In some implementations, when the power charged in the main battery 250 is discharged, the second current conversion unit 240 can operate to receive a DC current from the main battery 250. For example, the second current conversion unit 240 may receive a DC current of 48 V equal to the operating voltage of the main battery 250. As such, when the current is input from the main battery 250, the second current conversion unit 240 may convert the input DC current into an AC current of 48 V and output the converted current to the transformation unit 230.

In some implementations, the transformation unit 230 can operate to transform the input AC current into a current according to an operation voltage of an auxiliary battery to supply or charge power for the additional devices or various additional devices provided in the electric vehicle. For example, when the operating voltage of the additional device and the auxiliary battery is 12 V, the transformation unit 230 can operate to transform the AC current of 48 V into an AC current of 12 V and output the transformed AC current to the third current conversion unit 260.

In some implementations, the third current conversion unit 260 may be connected to the auxiliary battery to supply or charge power for the additional devices or various additional devices provided in the electric vehicle. When an AC current having the operating voltage of the additional devices and the auxiliary battery is applied, the third current conversion unit 260 can operate to convert the AC current into a DC current. The converted DC current may be supplied to the connected additional device or the auxiliary battery. In the illustrated example, an auxiliary battery 270 is illustrated to be connected to the third current conversion unit 260.

As described herein, the transformation unit 230 of the DC-DC converter according to an embodiment of the present disclosure may be connected to both the resonant tank 220 and the third current conversion unit 260, and also to the second current conversion unit 240. When a current is input from any one side, the transformation unit 230 may convert the input current into a current having a different voltage according to electromagnetic induction and output the converted current. That is, when a current is applied from the resonant tank 220, the transformation unit 230 of the DC-DC converter according to the embodiment may be configured to transform the input current and output the transformed current to the second current conversion unit 240. On the other hand, when a current is applied from the second current conversion unit 240, the transformation unit 230 may be configured to output the applied current to the third current conversion unit 260.

Therefore, when commercial power converted into a DC current by the PFC converter is applied, the first current conversion unit 210, the resonant tank 220, the transformation unit 230, the second current conversion unit 240 may be connected (280) in the DC-DC converter so as to vary a frequency of the current of the commercial power, to transform a voltage of the current having the varied frequency, and to supply the current with the transformed voltage to the main battery 250 as charging power. That is, when commercial power is applied, the DC-DC converter may operate as a resonant converter.

On the other hand, when power is applied from the main battery 250, the second current conversion unit 240, the transformation unit 230, and the third current conversion unit 260 may be connected (290) in the DC-DC converter so as to transform the current supplied from the main battery 250 and to supply the transformed current to the auxiliary battery 270. That is, when power is applied from the main battery 250, the DC-DC converter may operate as a PWM converter.

Diagram (b) in FIG. 2 illustrates an example circuit structure of the resonant tank 220 and the transformation unit 230 in the DC-DC converter according to an embodiment of the present disclosure.

Referring to Diagram (b) of FIG. 2, the transformation unit 230 may be provided with a first inductor 232 connected to the resonant tank 220 and a third inductor connected to the third current conversion unit 260 on one side of the insulator 231, and a second inductor 233 connected to the second current conversion unit 240 on an other side of the insulator 231. For example, the third inductor may be configured by connecting a plurality of inductors 234, 235 in series.

In some implementations, the resonant tank 220 may include a resonant inductor 221 and a capacitor 222. In addition, the first inductor 232 of the transformation unit 230 may include an auxiliary inductor 225 such that ends of the auxiliary inductor 225 are connected to ends of the first inductor 232, respectively. That is, the first inductor 232 and the auxiliary inductor 225 may be connected in parallel to each other, and accordingly the inductance value required by the resonant converter may be generated in accordance with the parallel connection of the first inductor 232 and the auxiliary inductor 225 as shown in Equation 1 below.

[Equation 1]

$$L1 \parallel Le = \frac{L1 \times Le}{L1 + Le}$$

Here, L1 denotes an inductance of the first inductor, Le denotes an inductance of the auxiliary inductor, and $L1 \parallel Le$ denotes an inductance when the L1 and Le are connected in parallel.

In some implementations, according to the inductance L1 of the first inductor 232, an inductance of the second inductor 233 may be determined according to a turns ratio between a side (first inductor 232) applying a current and a side (second inductor 233) receiving the current. This is expressed by Equation 2.

[Equation 2]

$$L1 = L2 \times (\frac{Np}{Ns})^2$$

Here, L1 denotes an inductance of the first inductor, L2 denotes an inductance of the second inductor, Np denotes a number of turns of an inductor at a side applying a current, and Ns denotes a number of turns of an inductor at a side receiving the current.

Accordingly, when an inductance of the first inductor 232 (first inductance) is determined, an inductance of the second inductor 233 (second inductance) may be determined. In some implementations of the present disclosure, when power from the main battery 250 is discharged, a side supplying a current and a side receiving a current may be changed at the transformation unit 230. For example, the side supplying the current may be the second inductor 233 and the side receiving the current may be the third inductor 234, 235. In addition, as shown in Equation 2, because an inductance of a side receiving a current is determined according to an inductance of a side supplying a current, when a second inductance of the second inductor 233 is determined, a third inductance of the third inductor 234, 235 may also be determined in a manner similar to Equation 2. For example, because the second inductance may be greater as the first inductance is greater, the third inductance may be greater as the first inductance is greater.

In some implementations, unlike the operation as a resonant converter, the transformation unit 230 can operate as a PWM converter transforming the supplied current by the second inductor 233 and the third inductor 234, 235, when the main battery 250 is discharged. Therefore, the greater the size of the third inductance is, the more the transformation unit 230 operates efficiently. On the other hand, for the resonant converter that transforms a current input from a commercial power by the first inductor 232 and the second inductor 233, the size of the first inductor 232 may be limited because a specific inductance value is required.

However, as shown in Diagram (b) of FIG. 2, in embodiments that the auxiliary inductor 225 is connected in parallel with the first inductor 232, when the inductance of the first inductor 232 has a value sufficiently greater than that of the inductance of the auxiliary inductor 225 (that is, the first inductor 232 has a value with a preset level greater than that of the auxiliary inductor 225), inductance values of the parallel connected inductors (e.g., an inductance value of the auxiliary inductor 225) may be converged to a smaller value.

Therefore, regardless of the size of the first inductor 232, the inductance value of the auxiliary inductor 225 may be the inductance value of the first inductor 232 and the auxiliary inductor 225 connected in parallel. Therefore, when an inductance of the auxiliary inductor 225 is determined according to an inductance value required in the resonant converter, it is possible to sufficiently increase the size of the first inductor 232.

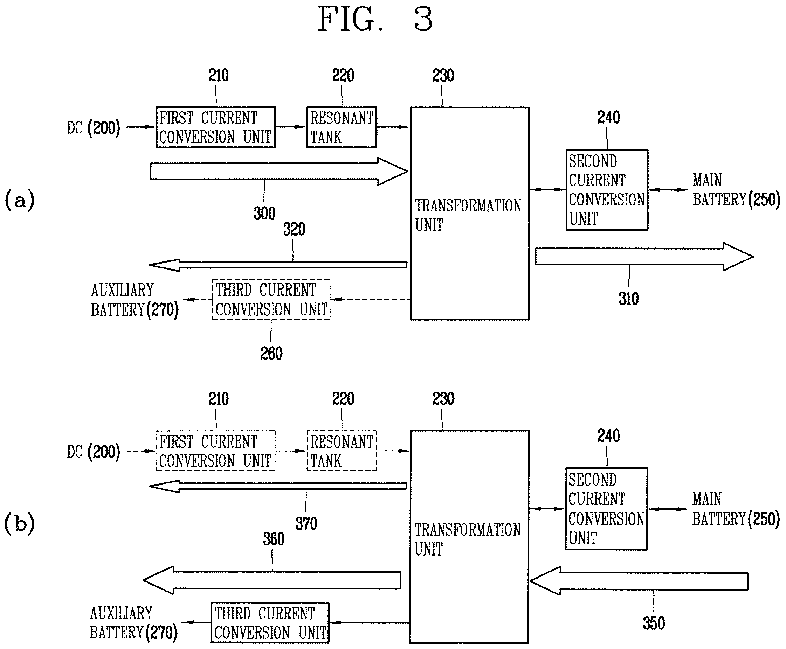

FIG. 3 show diagrams (a) and (b) to illustrate respective current flows when charging and discharging the main battery 250 in the DC-DC converter according to an embodiment of the present disclosure having the resonance tank 220 and the transformation unit 230.

First, Diagram (a) of FIG. 3 illustrates an example process in which a PFC converts an AC current of commercial power source into a DC current and inputs the same to the DC-DC converter according to an embodiment of the present disclosure. For example, the input current may be input 300 to the transformation unit 230 through the first current conversion unit 210 and the resonant tank 220, and the current transformed by the transformation unit 230 may be supplied 310 to the main battery 250 through the second current conversion unit 240.

In some implementations, the transformation unit 230 according to an embodiment of the present disclosure may also be connected to the third current conversion unit 260 as illustrated in FIG. 2. Accordingly, a reflection current 320 may be supplied to the third current conversion unit 260 due to a voltage reflection phenomenon. For example, the reflection current 320 may be converted back into a DC current by the third current conversion unit 260, and the converted reflection current 320 may be supplied as a charging current for the auxiliary battery 270. This is because the reflection current is reflected in a small amount according to a characteristic of the transformation unit 230 and the voltage thereof is not high. Therefore, the reflection current may be used as a charging current for the auxiliary battery 270. In addition, since a path through which the reflection current flows in is also a path through which the current is output, there is no problem even when the reflection current is output, and rather be usable.

On the other hand, Diagram (b) of Figure 3 illustrates an example process in which a current charged in the main battery is input to the DC-DC converter according to an embodiment of the present disclosure. For example, the input current may be input 350 to the transformation unit 230 through the second current conversion unit 240, and the current transformed by the transformation unit 230 may be supplied 360 to the auxiliary battery 270 through the third current conversion unit 260.

The transformation unit 230 according to an embodiment of the present disclosure may also be connected to the resonant tank 220 as described above. Accordingly, the reflection current 320 may also be supplied to the resonant tank 220 due to the voltage reflection phenomenon. For example, a current may be input in a direction opposite to a direction in which power is output from the resonant tank 220, and the input current may be output through the first current conversion unit 210.

The first current conversion unit 210 and the resonant tank 220 may form a path to supply a charging current to the main battery 250. In some instances, the current may be output in the reverse direction in which the current is supplied, and this output current may become a leakage current or cause burnout of elements or voltage stress or current stress due to the current. To control the current that is supplied in a reverse direction when power is supplied from the main battery 250, some implementations of the present disclosure may include at least one switch.

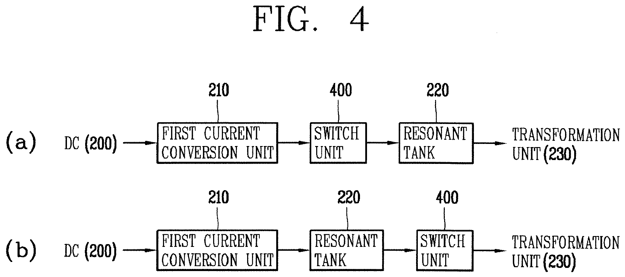

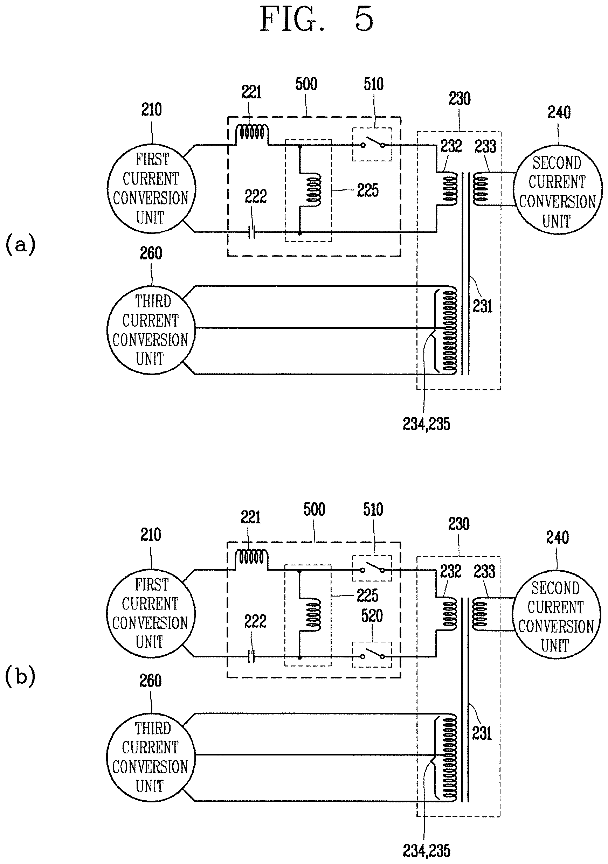

FIGS. 4 and 5 illustrate examples provided with at least one switch in the DC-DC converter according to the embodiment of the present disclosure.

FIG. 4 illustrates examples in which a switch unit 400 is provided between the first current conversion unit 210 and the transformation unit 230. For example, the switch unit 400 may be provided between the first current conversion unit 210 and the resonant tank 220 (as illustrated in Diagram (a) of FIG. 4), or between the resonant tank 220 and the transformation unit 230 (as illustrated in Diagram (b) of FIG. 4). In addition, the switch unit 400 may disconnect the circuit by opening the circuit while the power is supplied from the main battery 250 to prevent the reflection current supplied from the transformation unit 230 from flowing in.

Alternatively or in addition, the switch unit 400 may be controlled by the PFC. For example, when the PFC converts a commercial AD current into a DC current, the PFC may control the switch unit 400 so that between the first current conversion unit 210 and the resonant tank 220 (Diagram (a) of FIG. 4) or between the resonant tank 220 and the transformation unit 230 (Diagram (b) of FIG. 4) are connected.

On the other hand, when the commercial AC current is not converted into a DC current, the PFC allow the switch unit 400 to disconnect the connection, thereby between the first current conversion unit 210 and the resonance tank 220 (Diagram (a) of FIG. 4), or between the resonant tank 220 and the transformation unit 230 (Diagram (b) of FIG. 4) may be disconnected. For example, only while the power to charge the main battery 250 is being supplied, the first current conversion unit 210, the resonant tank 220, and the transformation unit 230 may be connected to each other.

In some implementations, at least one switch may be provided in the resonant tank 220. FIG. 5 illustrates examples in which switches are provided in the resonant tank.

Diagram (a) of FIG. 5 illustrates an example process -in which a switch 510 is provided between one end of the auxiliary inductor 225 and one end of the first inductor 232 so as to connect or disconnect the two inductors 225 and 232. For example, the switch 510 is closed when a DC current to charge the main battery 250 is input to the first current conversion unit 210 so that the one end of the auxiliary inductor 225 and one end of the first inductor 232 may be connected to each other.

For example, when the switch 510 is closed, the auxiliary inductor 225 and the first inductor 232 may be connected in parallel, and accordingly power conversion may be performed according to an inductance value upon the parallel connection of the auxiliary inductor 225 and the first inductor 232. That is, the first current conversion unit 210, the resonant tank 220, the transformation unit 230, and the second current conversion unit 240 may be connected to operate as a resonant converter.

On the other hand, when a DC current is not supplied to the first current conversion unit 210, the switch 510 is kept in an open state so that the connection between the one end of the auxiliary inductor 225 and the one end of the first inductor 232 may be disconnected. For example, since the connection between the auxiliary inductor 225 and the first inductor 232 is disconnected, the connection between the transformation unit 230 and the resonant tank 220 may also be disconnected.

Therefore, when a current is input from the main battery 250 through the second current conversion unit 240, since the circuit of the first inductor 232 is cut off, the current may be transformed through the third inductor 234, 235 and the second inductor 233. The transformed current may be output to the third current conversion unit 260. Therefore, the second current conversion unit 240, the transformation unit 230, and the third current conversion unit 260 are connected, so that the DC-DC converter according to the embodiment of the present disclosure may operate as a PWM converter.

In alternative implementations, as illustrated in Diagram (b) of FIG. 5, a plurality of switches 510 may be provided at ends of the first inductor and at ends of the auxiliary inductor, respectively. For example, the switches 510, 520 may operate in synchronization with each other and may be opened or closed at the same time.

In addition, the switch 510 or the switches 510, 520 may be controlled by the PFC, in the same or similar manner as the switch unit 400. That is, the PFC may control the switch 510 or the switches 510, 520 to be closed when converting a commercial AC current into a DC current. For example, while power to charge the main battery 250 is being supplied, the switch 510 or the switches 510, 520 may be closed to operate as a resonant converter. When operating as the resonant converter as described above, a current may be sequentially applied to the first conversion unit 210, the resonant tank 500, the transformation unit 230, and the second conversion unit 240.

On the other hand, the PFC may control the switch 510 or the switches 510, 520 to be open when a commercial AC current is not converted into a DC current. For example, since the circuit of the first inductor 232 of the transformation unit 230 is disconnected (e.g., broken), the current may be transformed through the third inductor 234, 235 and the second inductor 233, and the transformed current may be output to the third current conversion unit 260. That is, the second current conversion unit 240, the transformation unit 230, and the third current conversion unit 260 may be connected to operate as a PWM converter. As such, when operating as the PWM converter, current may be sequentially applied to the second conversion unit 240, the transformation unit 230, and the third conversion unit 260.

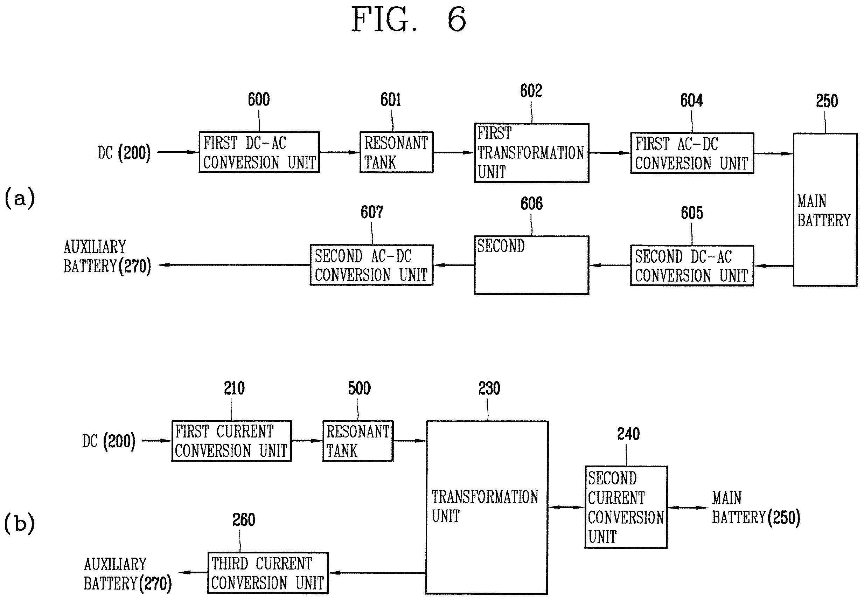

FIG. 6 is a block diagram illustrating an example process in which the DC-DC converter according to an embodiment of the present disclosure is provided, as opposed to a typical example circuit including both a resonant converter and a PWM converter are provided.

Diagram (a) of FIG. 6 illustrates an example process in which the main battery 250 includes both a resonant converter and a PWM converter.

Referring to Diagram (a) of FIG. 6, the resonant converter includes a first DC-AC conversion unit 600, a resonant tank 601, a first transformation unit 602, and a first AC-DC conversion unit 604 and is connected to the main battery 250. Further, the PWM converter includes a second DC-AC conversion unit 605, a second transformation unit 606, and a second AC-DC conversion unit 607 and is connected to the main battery 250.

In this case, when a commercial AC current is converted into a DC current in the PFC, the converted DC current 200 may be converted into an AC current by the first DC-AC conversion unit 600. In addition, the current converted in the first DC-AC conversion unit 600 may vary in frequency by the resonant tank 601, and the AC current with the varied frequency may be transformed into a voltage to charge the main battery 250 by the first transformation unit 230. The transformed AC current may be input to the first AC-DC conversion unit 604, converted into DC current, and the converted DC current may be supplied to the main battery 250 to charge the main battery 250.

Meanwhile, the current of the main battery 250 may be converted into an AC current by the second DC-AC conversion unit 605. The converted AC current may be transformed into an operating voltage for the auxiliary battery 270 and additional devices of the vehicle. And, the transformed AC current may be converted into a DC current by the second AC-DC conversion unit 607, and supplied as a power source for the auxiliary battery 270 and additional devices of the vehicle.

However, as illustrated in Diagram (a) of FIG. 6, a plurality of DC-AC conversion units and AC-DC conversion units are provided and a plurality of transformation units are also provided, when both the resonant converter and the PWM converter are provided. Accordingly, an internal space to install the DC-DC converter is required.

On the contrary, Diagram (b) of FIG. 6 illustrates an example process in which the main battery 250 is provided with a DC-DC converter operable as both a resonant converter and a PWM converter, according to an embodiment of the present disclosure.

Referring to Diagram (b) of Figure 6, the DC-DC converter according to the embodiment of the present disclosure may be provided only with the first current conversion unit 210, the resonant tank 220, the transformation unit 230, the second current conversion unit 240 and the third current conversion unit 260. Accordingly, in the DC-DC converter according to the embodiment of the present disclosure, the transformation units and the current conversion units can be further reduced in number, and an inner space of the electric vehicle required to install the DC-DC converter may be reduced. As a result, the inner space of the electric vehicle can be used more efficiently.

Meanwhile, several embodiments have been described herein, but various modifications may be made without departing from the scope of the present disclosure. Therefore, those skilled in the art to which the present disclosure pertains would understand various modifications and variations will be possible without departing from the essential characteristics of the present disclosure. Therefore, the embodiments disclosed herein are not intended to limit the technical idea of the present disclosure, and the scope of the technical idea of the present disclosure is not limited by these embodiments. The scope of some implementations of the present disclosure is interpreted by the following claims, and all technical ideas within the equivalent scope should be interpreted as being included in the scope of the present disclosure.

## Claims

1. A direct-current to direct-current (DC-DC) converter comprising:

 a first converter(210);
 a resonant tank(220) coupled to the first converter(210);
 a second converter(240);
 a third converter(260); and
 a transformer(230) having a first side coupled to the resonant tank(220) and the third converter(260), and a second side coupled to the second converter(240),
 wherein, based on a first direct current (DC)(200) being input to the DC-DC converter:

 the first converter(210) is configured to receive the first DC(200) and convert the received first DC(200) into a first alternating current (AC);
 the resonant tank(220) is configured to receive the first AC from the first converter(210) and adjust a frequency of the first AC;
 the transformer(230) is configured to receive and transform the first AC with the adjusted frequency into a second AC having a charging voltage for a main battery(250) of an electric vehicle, and output the second AC to the second converter(240); and
 the second converter(240) is configured to convert the second AC having the charging voltage for the main battery(250) into a second DC for charging the main battery(250); and

 wherein, based on a third DC being input from the main battery(250):

 the second converter(240) is configured to receive the third DC from the main battery(250) and convert the third DC into a third AC;
 the transformer(230) is configured to receive and transform the third AC into a fourth AC having a specific voltage, and output the fourth AC to the third converter(260); and
 the third converter(260) is configured to receive the fourth AC and convert the fourth AC into a fourth DC to be supplied to one or more devices located in the electric vehicle.

2. The converter of claim 1, wherein the transformer(230) comprises:

 an insulator(231) having a first insulator side and a second insulator side;
 a first inductor(232) and a third inductor(234, 235) provided at the first insulator side of the insulator(231), the first inductor(232) connected to the first converter(210), and the third inductor(234, 235) connected to the third converter(260); and

a second inductor(233) provided at the second insulator side of the insulator(231) and connected to the second converter(240);

wherein the transformer(230), based on the first AC being input through the first inductor(232), is configured transform the first AC into the second AC having the charging voltage for the main battery(250) according to a turn ratio between the first inductor(232) and the second inductor(233), and

wherein the transformer(230), based on the third AC being input through the second inductor(233), is configured to transform the third AC into the fourth AC having the specific voltage according to a turn ratio between the second inductor(233) and the third inductor(234, 235).

3. The converter of claim 2, wherein an inductance of the second inductor(233) is determined according to an inductance of the first inductor(232), and an inductance of the third inductor(234, 235) is determined according to the inductance of the second inductor(233).

4. The converter of claim 3, wherein the third inductor(234, 235) includes a plurality of inductors connected in series.

5. The converter of anyone of claims 2 to 4, wherein the resonant tank(220) comprises:

an auxiliary inductor(225) having ends connected to ends of the first inductor(232) of the transformer(230), respectively; and

at least one switch, each provided between one of the ends of the first inductor(232) and one of the ends of the auxiliary inductor to selectively connect the one of the ends of the auxiliary inductor and the one of the ends of the first inductor(232),

wherein, based on the first DC(200) being input to the DC-DC converter, the at least one switch is each configured to be closed to connect the ends of the auxiliary inductor and the ends of the first inductor(232), respectively, and, based on absence of the first DC(200) from input to the DC-DC converter, the at least one switch is each configured to be opened to release the connection between the ends of the auxiliary inductor and the ends of the first inductor(232).

6. The converter of claim 5, wherein the auxiliary inductor of the resonant tank(220) is configured to be connected with the first inductor(232) in parallel based on the at least one switch being closed, to generate an inductance that allows the transformer(230) to transform the first AC into the second AC having the charging voltage for the main battery(250).

7. The converter of claim 6, wherein an inductance of the first inductor(232) is predetermined to be greater than an inductance of the auxiliary inductor(225).

8. The converter of anyone of claims 1 to 7, further comprising:

a switch provided between the first converter(210) and the resonant tank(220) or between the resonant tank(220) and the transformer(230),

wherein the switch is configured to be closed based on the first DC(200) being input to the DC-DC converter, or open based on absence of the first DC(200) from input to the DC-DC converter.

9. The converter of claim 5, further comprising:
a power factor correction (PFC) converter configured to convert a commercial AC into the first DC(200), the power factor correct converter configured to control the at least one switch to be closed based on the commercial AC being converted into the first DC(200).

10. The converter of claim 8, further comprising:
a power factor correction (PFC) converter configured to convert a commercial AC into the first DC(200), the power factor correct converter configured to control the switch to be closed based on the commercial AC being converted into the first DC(200).

11. The converter of claim 5, wherein the DC-DC converter operates as a resonant converter in which the at least one switch is closed and a current is sequentially applied through the first converter(210), the resonant tank(220), the transformer(230), and the second converter(240), and operates as a pulse width modulation (PWM) converter in which the at least one switch is open and a current is sequentially applied through the second converter(240), the transformer(230), and the third converter(260).

12. The converter of claim 8, wherein the DC-DC converter operates as a resonant converter in which the switch is closed and a current is sequentially applied through the first converter(210), the resonant tank(220), the transformer(230), and the second converter(240), and operates as a pulse width modulation (PWM) converter in which the switch is open and a current is sequentially applied through the second converter(240), the transformer(230), and the third converter(260).

13. The converter of anyone of claims 1 to 12, wherein the resonant tank(220) includes a resonant inductor(221) and a capacitor(222).

14. A method of reversibly operating a direct current to direct current (DC-DC) converter, comprising:

based on a first direct current (DC) being input to the DC-DC converter in a first direction,

converting, using a first converter(210), the first direct current (DC) to a first alternating current (AC);
adjusting, using a resonant tank(220), a frequency of the first AC;
transforming, using a transformer(230), the first AC with the adjusted frequency into a second AC; and
converting, using a second converter(240), the second AC into a second DC, and

based on a third DC being input to the DC-DC converter in a second direction reverse to the first direction,

converting, using the second converter(240), the third DC into a third AC;
transforming, using the transformer(230), the third AC to a fourth AC; and
converting, using a third converter(260), the fourth AC to a fourth DC.

# FIG. 1

FIRST
DC(100) → | FIRST CURRENT CONVERSION UNIT (110) | → | TRANSFORMATION UNIT (120) | → | SECOND CURRENT CONVERSION UNIT (130) | → SECOND DC(150)

# FIG. 2

(a)

280

290

DC (200) → FIRST CURRENT CONVERSION UNIT (210) → RESONANT TANK (220) → TRANSFORMATION UNIT (230) ↔ SECOND CURRENT CONVERSION UNIT (240) ↔ MAIN BATTERY (250)

TRANSFORMATION UNIT (230) → THIRD CURRENT CONVERSION UNIT (260) → AUXILIARY BATTERY (270)

(b)

FIRST CURRENT CONVERSION UNIT (210) — 221, 222, 220, 225, 232, 233 — SECOND CURRENT CONVERSION UNIT (240)

230, 231

THIRD CURRENT CONVERSION UNIT (260) — 234,235

EP 3 675 341 A1

12

# FIG. 3

(a)

DC (200) → FIRST CURRENT CONVERSION UNIT (210) → RESONANT TANK (220) → TRANSFORMATION UNIT (230) ↔ SECOND CURRENT CONVERSION UNIT (240) ↔ MAIN BATTERY (250)

300

320

310

AUXILIARY BATTERY (270) ← THIRD CURRENT CONVERSION UNIT (260) ⇠ TRANSFORMATION UNIT (230)

(b)

DC (200) ⇠ FIRST CURRENT CONVERSION UNIT (210) ⇠ RESONANT TANK (220) ⇠ TRANSFORMATION UNIT (230) ↔ SECOND CURRENT CONVERSION UNIT (240) ↔ MAIN BATTERY (250)

370

360

350

AUXILIARY BATTERY (270) ← THIRD CURRENT CONVERSION UNIT ← TRANSFORMATION UNIT (230)

EP 3 675 341 A1

# FIG. 4

(a)  DC (200) →  | FIRST CURRENT CONVERSION UNIT (210) | → | SWITCH UNIT (400) | → | RESONANT TANK (220) | → TRANSFORMATION UNIT (230)

(b)  DC (200) →  | FIRST CURRENT CONVERSION UNIT (210) | → | RESONANT TANK (220) | → | SWITCH UNIT (400) | → TRANSFORMATION UNIT (230)

# FIG. 5

(a)

(b)

# FIG. 6

(a)

DC (200) → FIRST DC-AC CONVERSION UNIT (600) → RESONANT TANK (601) → FIRST TRANSFORMATION UNIT (602) → FIRST AC-DC CONVERSION UNIT (604) → MAIN BATTERY (250)

AUXILIARY BATTERY (270) ← SECOND AC-DC CONVERSION UNIT (607) ← SECOND (606) ← SECOND DC-AC CONVERSION UNIT (605) ← MAIN BATTERY (250)

(b)

DC (200) → FIRST CURRENT CONVERSION UNIT (210) → RESONANT TANK (500) → TRANSFORMATION UNIT (230) → SECOND CURRENT CONVERSION UNIT (240) ← MAIN BATTERY (250)

AUXILIARY BATTERY (270) ← THIRD CURRENT CONVERSION UNIT (260) ← TRANSFORMATION UNIT (230)

EP 3 675 341 A1

Europäisches
Patentamt

European
Patent Office

Office européen
des brevets

## EUROPEAN SEARCH REPORT

Application Number

EP 19 21 9801

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/222333 A1 (KHALIGH ALIREZA [US] ET AL) 9 August 2018 (2018-08-09) * paragraphs [0018], [0080] - [0109]; figures 4,6-12 * | 1-3,5-14 | INV. H02M3/335 H02J7/08 |
| X | KRISHNASWAMI H ET AL: "Three-Port Series-Resonant DC-DC Converter to Interface Renewable Energy Sources With Bidirectional Load and Energy Storage Ports", IEEE TRANSACTIONS ON POWER ELECTRONICS, INSTITUTE OF ELECTRICAL AND ELECTRONICS ENGINEERS, USA, vol. 12, no. 10, 1 October 2009 (2009-10-01), pages 2289-2297, XP011271821, ISSN: 0885-8993 * paragraph [Introduction]; figure 1 * | 1-3,5-14 | |
| X | ZHANG NENG ET AL: "A review of topologies of three-port DC-DC converters for the integration of renewable energy and energy storage system", RENEWABLE AND SUSTAINABLE ENERGY REVIEWS, vol. 56, 1 April 2016 (2016-04-01), pages 388-401, XP029387107, ISSN: 1364-0321, DOI: 10.1016/J.RSER.2015.11.079 * paragraph [Section3.3]; figures 32,33 * | 1-14 | TECHNICAL FIELDS SEARCHED (IPC) H02M H02J |

The present search report has been drawn up for all claims

| Place of search | Date of completion of the search | Examiner |
|---|---|---|
| Munich | 13 March 2020 | Grosse, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 9801

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2020

| Patent document cited in search report | Publication date | Patent family member(s) | Publication date |
|---|---|---|---|
| US 2018222333 A1 | 09-08-2018 | US 2016016479 A1<br>US 2018222333 A1<br>WO 2015192133 A2 | 21-01-2016<br>09-08-2018<br>17-12-2015 |

EPO FORM P0459

For more details about this annex : see Official Journal of the European Patent Office, No. 12/82